# EUROPEAN PATENT APPLICATION

(11) **EP 4 714 749 A1**
(43) Date of publication of application: **25.03.2026**
(21) Application number: 24806926.2
(22) Date of filing: 12.04.2024
(51) Int. Cl.: B60R 11/02, B60K 35/81, G06F 3/0346, H04M 1/11

(54) **HOLDING DEVICE**

(30) Priority: 15.05.2023 JP 2023080189
(71) Applicant: Yazaki Corporation, Tokyo 108-0075 (JP)
(72) Inventor: IKEDA Kei, Susono-shi, Shizuoka 410-1194 (JP); FUKUDA Daisuke, Susono-shi, Shizuoka 410-1194 (JP)
(74) Representative: Hoffmann Eitle
(86) International application number: PCT/JP2024/014898
(87) International publication number: WO 2024/236972

(57) **Abstract**

A holding unit (3) holds a smartphone (2). A rotation unit (4) rotates the holding unit (3) about an axis intersecting a display screen (21). When vehicle information indicates a backward vehicle movement, an on-vehicle ECU (6) rotates the rotation unit (4) so that the longitudinal direction of the display screen (21) is along the left-right direction (horizontal placement), and when the vehicle information does not indicate the backward vehicle movement, the on-vehicle ECU (6) rotates the rotation unit (4) so that the longitudinal direction of the display screen (21) is along the up-down direction (vertical placement).

## Description

### TECHNICAL FIELD

The present invention relates to a holding device.

### BACKGROUND ART

In the related art, a holder (holding device) for holding an electronic device having a display screen such as a smartphone in a vehicle is known (Patent Literature 1). The holder in Patent Literature 1 holds the electronic device by a clamp mechanism, and rotates a rotation plate to rotate the clamp structure and the electronic device. Further, the holder in Patent Literature 1 can be rotated by an operation of a user.

### CITATION LIST

### PATENT LITERATURE

Patent Literature 1: JP2022-6530A

### SUMMARY OF INVENTION

### TECHNICAL PROBLEM

Incidentally, a user may want to place an electronic device vertically or horizontally depending on a state of a vehicle (for example, forward or backward). In this case, the holder in the related art has a problem that the user needs to rotate the electronic device by operating the holder.

The present invention has been made in view of the above circumstances, and an object of the present invention is to provide a holding device that can rotate an electronic device according to a state of a vehicle without an operation of a user.

### SOLUTION TO PROBLEM

In order to implement the above-described object, a holding device according to the present invention has the following features.

A holding device installed in a vehicle and for holding an electronic device including a display screen, the holding device including:
a holding unit configured to hold the electronic device;
a rotation unit configured to rotate the holding unit in a direction about an axis intersecting the display screen; and
a rotation control unit configured to control rotation of the rotation unit based on vehicle information indicating a state of the vehicle.

### ADVANTAGEOUS EFFECTS OF INVENTION

According to the present invention, it is possible to provide a holding device that can rotate an electronic device according to a state of a vehicle without an operation of a user.

The present invention has been briefly described above. Details of the present invention can be clarified by reading modes (hereinafter, referred to as "embodiments") for carrying out the invention to be described below with reference to the attached drawings.

### BRIEF DESCRIPTION OF DRAWINGS

[FIG. 1] FIG. 1 is an exploded perspective view illustrating a holding device according to a first embodiment of the present invention.
[FIG. 2] FIG. 2 is an electrical configuration diagram of the holding device illustrated in FIG. 1.
[FIG. 3] FIG. 3 is a flowchart illustrating a processing procedure of an in-vehicle ECU illustrated in FIG. 2.
[FIG. 4] FIG. 4 is a perspective view illustrating the holding device in FIG. 1 in which a smartphone is horizontally placed.
[FIG. 5] FIG. 5 is a perspective view illustrating the holding device illustrated in FIG. 1 in which the smartphone is vertically placed.
[FIG. 6] FIG. 6 is an exploded perspective view illustrating a holding device according to a second embodiment of the present invention.
[FIG. 7] FIG. 7 is an exploded perspective view illustrating a holding device according to a third embodiment of the present invention.
[FIG. 8] FIG. 8 is a partial cross-sectional view of FIG. 7.

### DESCRIPTION OF EMBODIMENTS

Specific embodiments of the present invention will be described below with reference to the drawings.

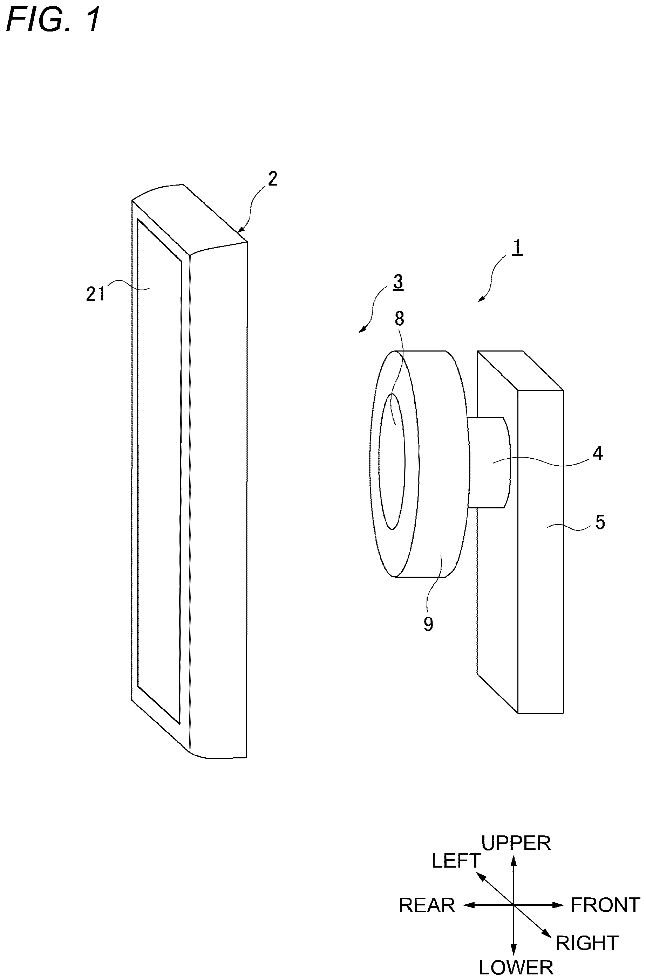

Hereinafter, for convenience of description, as illustrated in FIGS. 1 to 8, "front", "rear", "left", "right", "upper", and "lower" are defined. A "front-rear direction", a "left-right direction", and an "upper-lower direction" are orthogonal to one another. The "front-rear direction", the "left-right direction", and the "upper-lower direction" are directions as viewed from a user sitting in a driver seat or a passenger seat of a vehicle. The "front-rear direction" corresponds to an "axial direction" in the present invention.

### (First Embodiment)

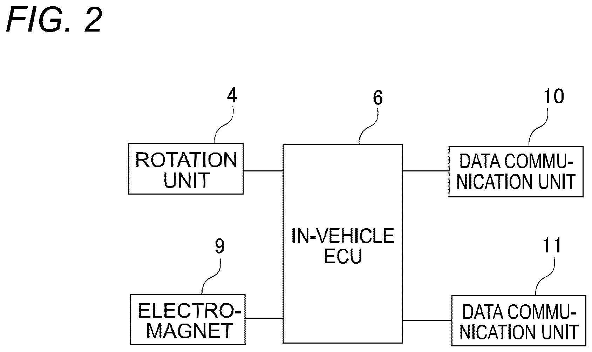

A holding device 1 illustrated in FIGS. 1 and 2 is a device that is installed on an instrument panel or the like of a vehicle and holds a smartphone 2. As illustrated in FIG. 1, the holding device 1 includes a holding unit 3 that holds the smartphone 2, a rotation unit 4 that rotates the holding unit 3 about an axis along the front-rear direction, a holding unit 5 that holds the rotation unit 4, and an in-vehicle electronic control unit (ECU) 6 (see FIG. 2) serving as a rotation control unit that controls rotation of the rotation unit 4 based on vehicle information indicating a state of the vehicle.

In the smartphone 2, a display screen 21 is provided on a front side, and a ferromagnetic material such as iron attracted to a magnet and the magnet are built in on a back side.

As illustrated in FIG. 1, the holding unit 3 includes a permanent magnet 8 and an electromagnet 9 serving as a first electromagnet.

The permanent magnet 8 has a disk shape disposed vertically in the front-rear direction, and is provided to attract the ferromagnetic material or the magnet built in the smartphone 2. In the present embodiment, an S pole and an N pole of the permanent magnet 8 are arranged along the front-rear direction. That is, the permanent magnet 8 is provided such that a magnetization direction is along the front-rear direction.

The electromagnet 9 has a ring shape, and the permanent magnet 8 is fitted and fixed at a center thereof. In the present embodiment, the electromagnet 9 has a coil (not illustrated) wound around the axis along the front-rear direction, and an N pole and an S pole are arranged side by side along the front-rear direction similarly to the permanent magnet 8. That is, the electromagnet 9 is provided such that a magnetization direction is along the front-rear direction. When a current flows through the coil of the electromagnet 9 such that the magnetization direction of the electromagnet 9 is the same as that of the permanent magnet 8, a magnetic force is generated that attracts the smartphone 2 to the electromagnet 9. When the current flows through the coil of the electromagnet 9 such that the magnetization direction of the electromagnet 9 is opposite to that of the permanent magnet 8, a magnetic force is generated that repels the smartphone 2 and the electromagnet 9.

The rotation unit 4 includes a rotation shaft that rotates around the axis along the front-rear direction and a motor that rotates the rotation shaft (both not illustrated). When a rear end of the rotation shaft is fixed to the permanent magnet 8 and the rotation shaft is rotated by the motor, the permanent magnet 8 and the electromagnet 9 fixed to the permanent magnet 8 also rotate about the axis along the front-rear direction. When the permanent magnet 8 rotates, the smartphone 2 also rotates.

The holding unit 5 is fixed to, for example, the instrument panel of the vehicle and holds the rotation unit 4.

As illustrated in FIG. 2, the in-vehicle ECU 6 is connected to the coil of the electromagnet 9 and the motor of the rotation unit 4, and controls the magnetic force of the electromagnet 9 and the rotation of the rotation unit 4. The in-vehicle ECU 6 is connected to a data communication unit 10 that enables communication with an in-vehicle network such as an in-vehicle LAN. The in-vehicle ECU 6 receives vehicle information (for example, shift information indicating a position of a shift lever, on and off information of an ignition switch, and speed information of the vehicle) from the in-vehicle network through the data communication unit 10.

The in-vehicle ECU 6 is connected to a data communication unit 11 that enables communication with the smartphone 2. The in-vehicle ECU 6 receives electronic device information (model/model number information of the smartphone 2) and posture information (vertical placement or horizontal placement) from the smartphone 2 through the data communication unit 11.

Next, a use procedure of the holding device 1 having the above-described configuration will be described. The user brings a rear surface of the smartphone 2 close to the permanent magnet 8 and the electromagnet 9. Accordingly, the smartphone 2 is attracted to the permanent magnet 8 and the electromagnet 9 by the magnetic force of the permanent magnet 8 and the electromagnet 9, and is held by the holding unit 3.

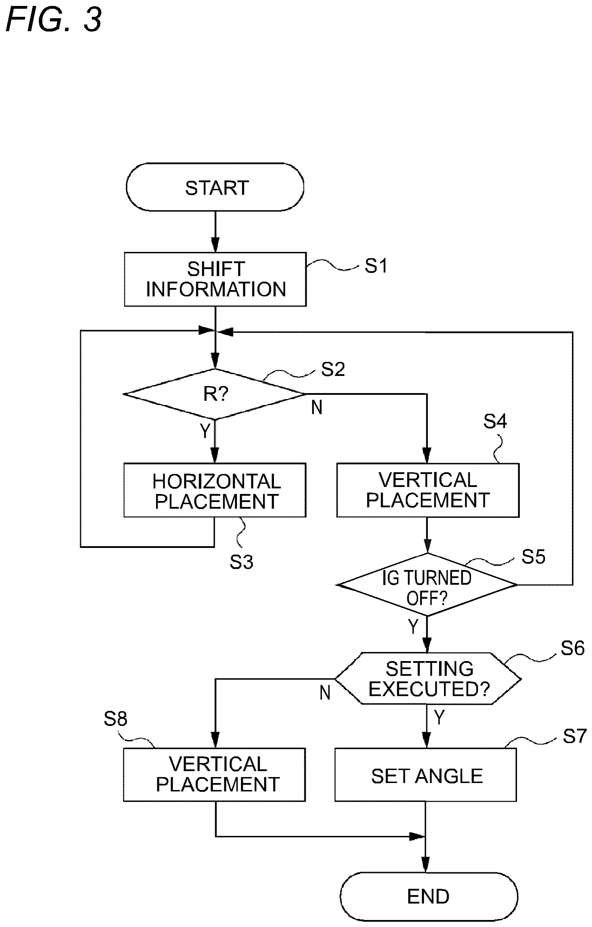

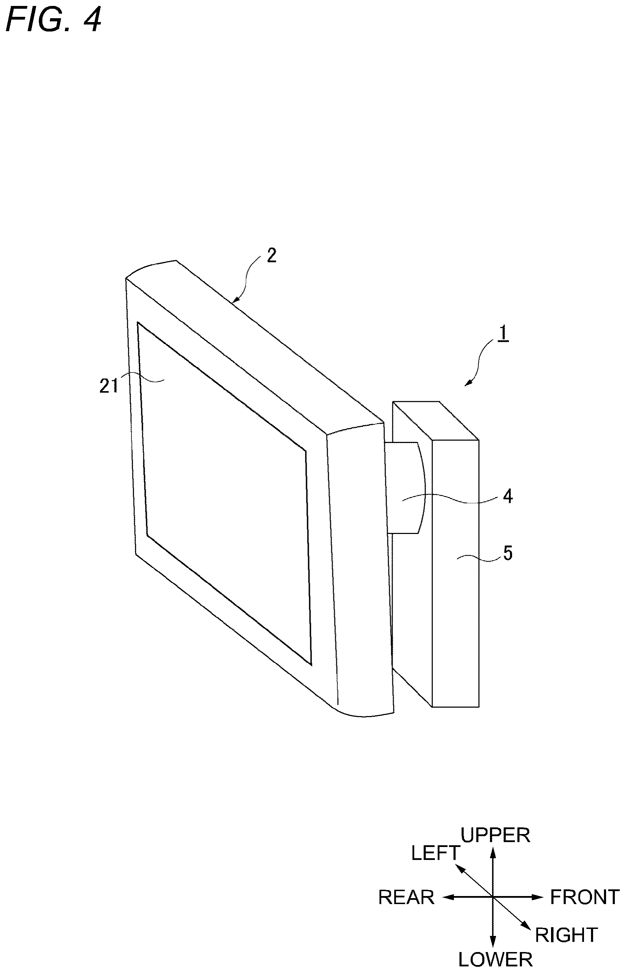

Next, a control operation of the rotation unit 4 of the holding device 1 having the above-described configuration will be described below with reference to FIG. 3. First, when the ignition switch is turned on, the in-vehicle ECU 6 starts processing and acquires the shift information (S1). If the shift information indicates that the position of the shift lever is R, that is, indicates that the vehicle is in reverse (Y in S2), the in-vehicle ECU 6 controls the rotation unit 4 such that the smartphone 2 is horizontally placed as illustrated in FIG. 4 (S3). When the smartphone 2 is horizontally placed, a longitudinal direction of the display screen 21 is along the left-right direction. In S3, the in-vehicle ECU 6 acquires the posture information by communicating with the smartphone 2, and does not cause the rotation unit 4 to rotate when the posture information indicates the horizontal placement, and causes the rotation unit 4 to rotate to be horizontally placed when the posture information indicates the vertical placement.

When the position of the shift lever is R, the smartphone 2 communicates with the in-vehicle network, receives an image from a camera attached at the rear of the vehicle, and displays the image on the display screen 21, thereby being used as a rear monitor. As illustrated in FIG. 4, it is easier to use the smartphone 2 as the rear monitor when the smartphone 2 is horizontally placed.

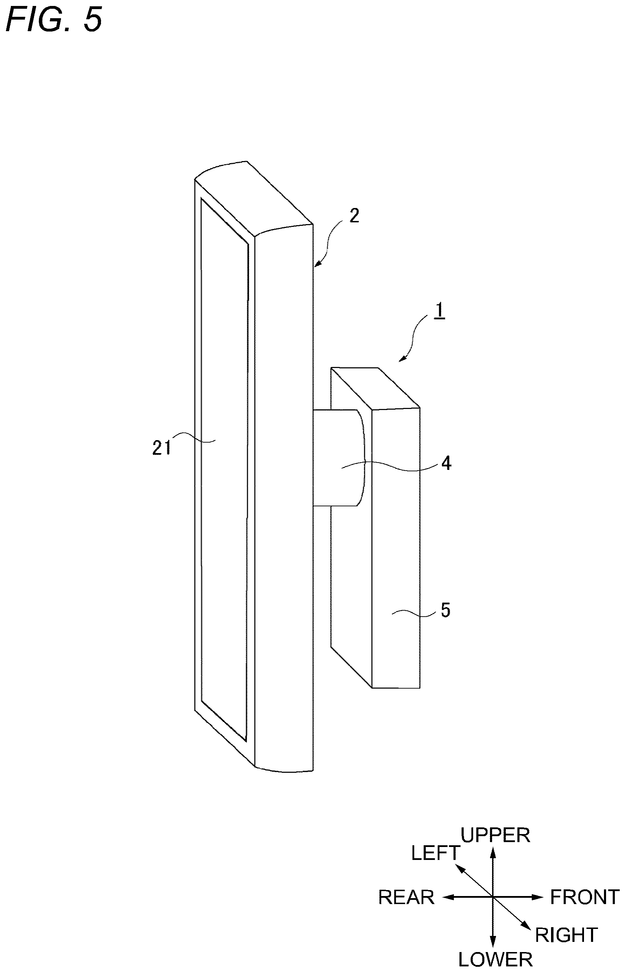

On the other hand, when the shift information indicates that the shift lever is in a position other than R, that is, does not indicate that the vehicle is in reverse (N in S2), the in-vehicle ECU 6 controls the rotation unit 4 such that the smartphone 2 is placed vertically as illustrated in FIG. 5 (S4). When the smartphone 2 is vertically placed, the longitudinal direction of the display screen 21 is along the upper-lower direction. Accordingly, when the smartphone 2 is not used as the rear monitor, the smartphone 2 can be vertically placed as in a normal use. In S4, the in-vehicle ECU 6 acquires the posture information by communicating with the smartphone 2, and does not cause the rotation unit 4 to rotate when the posture information indicates the vertical placement, and causes the rotation unit 4 to rotate to be vertically placed when the posture information indicates the horizontal placement.

Next, if the ignition switch is not turned off (N in S5), the in-vehicle ECU 6 returns to S2. On the other hand, if the ignition switch is turned off (Y in S5), the in-vehicle ECU 6 determines whether a removal angle (predetermined rotation position) of the smartphone 2 is set by the user (S6).

Specifically, the user can set, by communicating with the in-vehicle ECU 6 using an application for the holding device 1, the removal angle to an angle at which the user can easily remove the smartphone 2. The removal angle is, for example, an angle formed between the upper-lower direction and the longitudinal direction of the display screen 21. If the removal angle has been set by the user (Y in S6), the in-vehicle ECU 6 rotates the rotation unit 4 to the removal angle set by the user (S7), and then ends the processing.

If the set angle is not set in advance (N in S6), the in-vehicle ECU 6 rotates the rotation unit 4 to be vertically placed (removal angle = 90°) as illustrated in FIG. 5 (S8), and then ends the processing.

Next, a control operation of the electromagnet 9 of the holding device 1 having the above-described configuration will be described below. The in-vehicle ECU 6 functions as an electromagnet control unit and controls the electromagnet 9. The in-vehicle ECU 6 acquires the shift information or the speed information in response to turning on of the ignition switch. The in-vehicle ECU 6 controls the electromagnet 9 to increase an attraction force of the smartphone 2 to the holding unit 3 when the shift information or the speed information indicates that the vehicle is traveling, and controls the electromagnet 9 to decrease the attraction force of the smartphone 2 to the holding unit 3 when the shift information or the speed information indicates that the vehicle is stopped.

Accordingly, while the vehicle is traveling, the smartphone 2 can be firmly attracted and held by the holding unit 3. Further, while the vehicle is stopped, the attraction force of the smartphone 2 to the holding unit 3 decreases, and the smartphone 2 can be easily removed.

Specifically, the in-vehicle ECU 6 causes the current to flow through the coil of the electromagnet 9 such that the magnetization direction of the electromagnet 9 is the same as that of the permanent magnet 8 while the vehicle is traveling and while the vehicle is stopped, and causes an amount of the current to the coil while the vehicle is stopped to be smaller than an amount of the current to the coil while the vehicle is traveling. Accordingly, the attraction force of the smartphone 2 while the vehicle is stopped can be made smaller than the attraction force of the smartphone 2 while the vehicle is traveling.

Further, the in-vehicle ECU 6 may cause the current to flow through the coil of the electromagnet 9 such that the magnetization direction of the electromagnet 9 is the same as that of the permanent magnet 8 while the vehicle is traveling, and may cause the magnetization direction of the electromagnet 9 to be opposite to that of the permanent magnet 8 by reversing a direction of the current flowing through the coil while the vehicle is stopped. In this case, a magnetic force that repels the smartphone 2 is generated in the electromagnet 9, and the attraction force of the smartphone 2 can be further decreased while the vehicle is stopped.

The in-vehicle ECU 6 receives the model/model number information through communication with the smartphone 2. Since a weight of the smartphone 2 is known based on the model/model number information, the in-vehicle ECU 6 may control the electromagnet 9 such that the attraction force of the smartphone 2 increases as the weight increases.

According to the above-described first embodiment, since the in-vehicle ECU 6 controls the rotation of the rotation unit 4 according to the vehicle information indicating the state of the vehicle, the smartphone 2 can be rotated according to the state of the vehicle without a user's operation.

According to the above-described first embodiment, when the vehicle is in reverse, the smartphone 2 is horizontally placed (the longitudinal direction of the display screen 21 is along the left-right direction), and is easily used as the rear monitor. The smartphone 2 is vertically placed (the longitudinal direction of the display screen 21 is along the upper-lower direction) except when the vehicle is in reverse, and the smartphone 2 may be disposed in the same manner as in the normal use.

According to the above-described first embodiment, the in-vehicle ECU 6 controls the magnetic force of the electromagnet 9 such that the attraction force of the smartphone 2 to the holding unit 3 decreases while the vehicle is stopped, and controls the magnetic force of the electromagnet 9 such that the attraction force of the smartphone 2 to the holding unit 3 increases while the vehicle is traveling. Accordingly, the attraction force of the smartphone 2 to the holding unit 3 is increased while the vehicle is traveling, and the smartphone 2 can be prevented from falling off the holding device 1. The attraction force of the smartphone 2 to the holding unit 3 decreases while the vehicle is stopped, and the smartphone 2 can be easily removed from the holding device 1.

### (Second Embodiment)

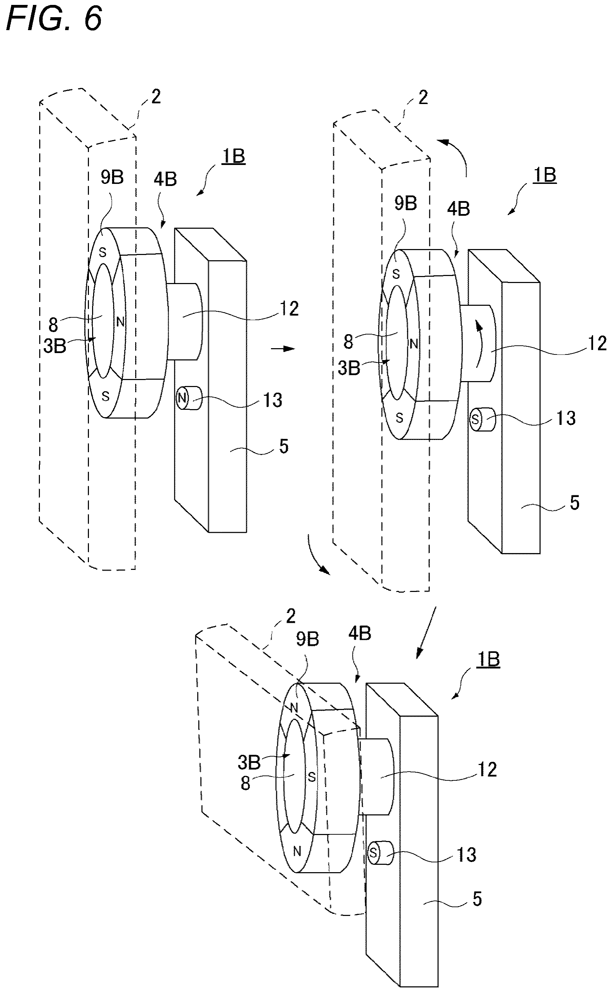

Next, a holding device 1B according to the second embodiment will be described below with reference to FIG. 6. In FIG. 6, the same reference signs are given to the same parts as those of the holding device 1 illustrated in FIG. 1 and the like that have already been described in the above-described first embodiment, and the detailed description thereof will be omitted.

As illustrated in FIG. 6, the holding device 1B includes a holding unit 3B that holds the smartphone 2, a rotation unit 4B, the holding unit 5, and the in-vehicle ECU 6. In the second embodiment, the holding unit 3B includes the permanent magnet 8 and an electromagnet 9B. Since a positioning member 7 and the permanent magnet 8 are the same as those in the first embodiment, detailed description thereof will be omitted here.

The electromagnet 9B has a ring shape, and the permanent magnet 8 is fitted and fixed at a center thereof. In the electromagnet 9B, a coil (not illustrated) is wound such that a magnetization direction is in a direction about the axis along the front-rear direction, and N poles and S poles are alternately arranged side by side along the direction about the axis. In the present embodiment, the electromagnet 9B has two N poles and two S poles. The rotation unit 4B includes a rotation shaft 12 and an electromagnet 13 serving as a second electromagnet. The rotation shaft 12 is fixed to the permanent magnet 8, and is held by the holding unit 5 to be rotatable in the direction about the axis along the front-rear direction.

The electromagnet 13 is held by the holding unit 5 and is disposed at a position facing the electromagnet 9B in the front-rear direction. The electromagnet 13 has a coil (not illustrated) wound around the axis along the front-rear direction, and an N pole and an S pole are arranged side by side along the front-rear direction. The in-vehicle ECU 6 controls the electromagnet 13 to alternately switch a magnetization direction such that a rear side is the N pole and a front side is the S pole, or the rear side is the S pole and the front side is the N pole.

Accordingly, for example, when the smartphone 2 is vertically placed, the S pole of the electromagnet 9B faces the electromagnet 13. At this time, when the rear side of the electromagnet 13 is controlled to the N pole, the rotation stops, and the smartphone 2 can be held vertically. Further, when the rear side of the electromagnet 13 is switched to the S pole, the electromagnet 9B and the electromagnet 13 repel each other to generate a rotational force, the rotation shaft 12 rotates, and the smartphone 2 is rotated to be horizontally placed. When the smartphone 2 is rotated to be horizontally placed, the N pole of the electromagnet 9B and the S pole of the electromagnet 13 face each other in the front-rear direction, the rotation stops, and the smartphone 2 can be held horizontally.

Similarly to the first embodiment, the in-vehicle ECU 6 controls the electromagnet 9B to increase an attraction force of the smartphone 2 to the holding unit 3B while the vehicle is traveling, and controls the electromagnet 9B to decrease the attraction force of the smartphone 2 to the holding unit 3B while the vehicle is stopped. Accordingly, the electromagnet 9B for holding the smartphone 2 can be used to rotate the holding unit 3B.

### (Third Embodiment)

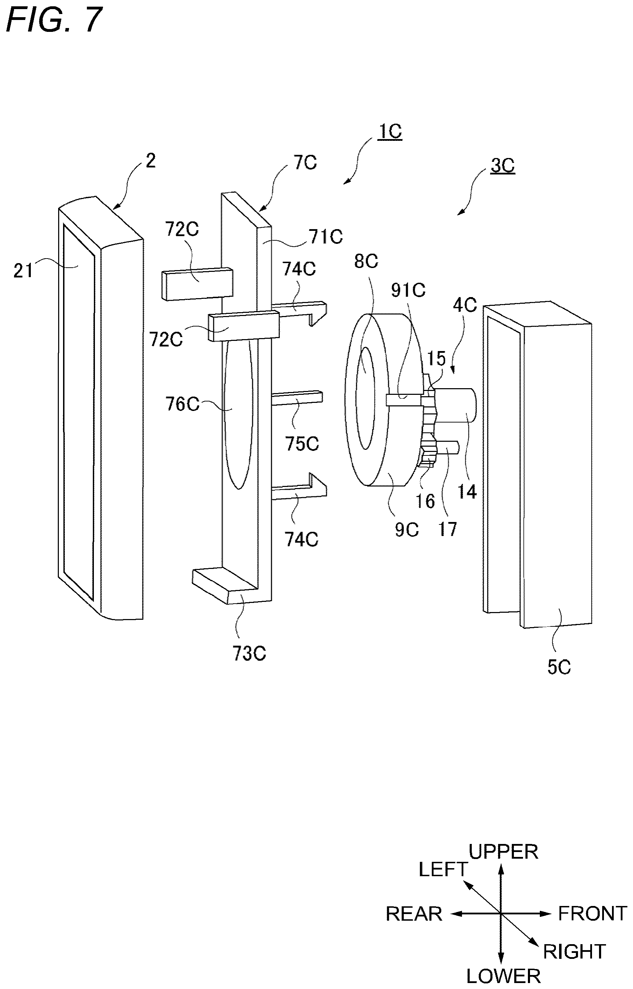

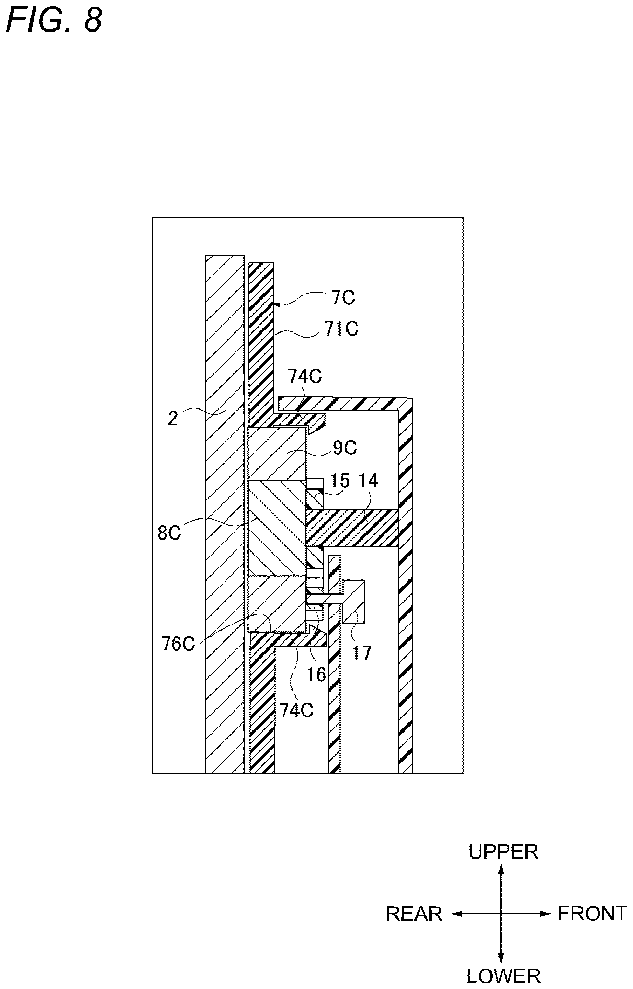

Next, a holding device 1C according to the third embodiment will be described below with reference to FIGS. 7 and 8. In FIGs. 7 and 8, the same reference signs are given to the same parts as those of the holding device 1 illustrated in FIG. 1 and the like that have already been described in the above-described first embodiment, and the detailed description thereof will be omitted.

As illustrated in FIGS. 7 and 8, the holding device 1C includes a holding unit 3C that holds the smartphone 2, a rotation unit 4C, a holding unit 5C, and the in-vehicle ECU 6. In the third embodiment, the holding unit 3C includes a positioning member 7C, a permanent magnet 8C, and an electromagnet 9C.

The positioning member 7C includes a flat plate portion 71C, a pair of restricting plates 72C, 72C, a restricting plate 73C, a pair of locking arms 74C, 74C, and a positioning protrusion 75C. The flat plate portion 71C is formed in a rectangular shape, and has a hole 76C at a center, into which a rear end of the electromagnet 9C (described later) is fitted. The pair of restricting plates 72C, 72C are erected from both ends of the flat plate portion 71C in a lateral direction toward a rear side, and restrict movement of the smartphone 2 in the lateral direction. The restricting plate 73C is erected from one end of the flat plate portion 71C in a longitudinal direction toward the rear side, and regulates movement of the smartphone 2 in the longitudinal direction.

The pair of locking arms 74C, 74C are erected from the flat plate portion 71C toward the front side, and each has a locking claw, which is locked to the electromagnet 9C in the front-rear direction, at a tip. The pair of locking arms 74C, 74C are arranged side by side along the longitudinal direction of the flat plate portion 71C. The positioning protrusion 75C protrudes from the flat plate portion 71C towards the front side.

The permanent magnet 8C has a disk shape, and does not have a positioning hole unlike the first embodiment. The electromagnet 9C has a ring shape as in the first embodiment, and the permanent magnet 8C is fixed at a center thereof. A positioning groove 91C along the front-rear direction, into which the positioning protrusion 75C is fitted, is formed on a side face of the electromagnet 9C. By fitting the positioning protrusion 75C of the positioning member 7C into the positioning groove 91C of the electromagnet 9C, when the electromagnet 9C rotates, the positioning member 7C also rotates.

The rotation unit 4C includes a rotation shaft 14, a gear 15, a gear 16, a rotation shaft 17, and a motor (not illustrated). The rotation shaft 14 is held to be rotatable about the axis along the front-rear direction with respect to the holding unit 5C, and a rear end thereof is fixed to the permanent magnet 8C. The gear 15 is attached to the rotation shaft 17. The gear 16 is attached to the rotation shaft 17 to mesh with the gear 15. The rotation shaft 17 is rotated about the axis along the front-rear direction by the motor. When the rotation shaft 17 is rotated by the motor, a rotational force of the rotation shaft 17 is transmitted to the rotation shaft 17 via the gear 15, 16, and the permanent magnet 8C can be rotated.

According to the above-described third embodiment, it is not necessary to fix the positioning member 7C to the smartphone 2, which is convenient to use.

The present invention is not limited to the above-described embodiments, and can be appropriately modified, improved, or the like. In addition, materials, shapes, sizes, numbers, arrangement positions, and the like of the components in the above-described embodiment are freely selected and are not limited as long as the present invention can be implemented.

According to the above-described embodiments, the smartphone 2 has been described as an example of the electronic device, but the electronic device is not limited thereto. The electronic device may be any device that has a display screen, such as a tablet.

According to the above-described embodiments, the holding units 3, 3B, and 3C attract and hold the smartphone 2 by the magnetic force of the permanent magnets 8, 8C, but the present disclosure is not limited thereto. The holding unit may have any structure that can hold the smartphone 2, and may, for example, hold the smartphone 2 by pinching both sides of the smartphone 2 in the lateral direction.

The rotation control of the smartphone 2 is not limited to the above-described embodiments. For example, when a navigation application of the smartphone 2 is used, the in-vehicle ECU 6 may control the rotation of the rotation unit 4 such that the smartphone 2 is vertically placed when traveling straight and the smartphone 2 is horizontally placed when turning right or left. Specifically, the in-vehicle ECU 6 communicates with the smartphone 2 to acquire navigation information, and controls the rotation unit 4 such that the smartphone 2 is vertically placed when the navigation information indicates a straight traveling direction.

In addition, in response to a right or left turn instruction from the navigation information or an operation of a turn switch, the in-vehicle ECU 6 determines that the vehicle is in the right or left turn, and controls the rotation unit 4 such that the smartphone 2 is placed horizontally. At this time, a rotation angle or a rotation speed of the smartphone 2 may be controlled in conjunction with information from a steering angle sensor. By placing the smartphone 2 horizontally when turning right or left, the user can check map information of a destination after turning, providing the user with more information.

When the right or left turn is completed, the in-vehicle ECU 6 returns the smartphone 2 to the vertical placement. The right or left turn can be completed based on position information of the vehicle and information from the steering angle sensor. When the smartphone 2 is returned from the horizontal placement to the vertical placement, the in-vehicle ECU 6 may control the rotation angle or the rotation speed of the smartphone 2 in conjunction with the information from the steering angle sensor.

Further, the smartphone 2 may be rotated according to a vehicle state such as the position information and the speed of the vehicle and the type of the application. The screen orientation that is easy to view varies depending on the application. When it is determined in cooperation with the speed information that the vehicle is traveling and the navigation application of the smartphone 2 is used, the in-vehicle ECU 6 causes the smartphone 2 to be vertically placed. When a video playback application of the smartphone 2 is used in a state where the vehicle is stopped, the in-vehicle ECU 6 causes the smartphone 2 to be horizontally placed. When the video playback application of the smartphone 2 is used while the vehicle is traveling, the in-vehicle ECU 6 may cause the smartphone 2 to be vertically placed to make it difficult for the user to watch the video.

In addition, when the navigation application of the smartphone 2 is used during delivery in a delivery work, the in-vehicle ECU 6 causes the smartphone 2 to be vertically placed. Then, when a delivery destination is determined to be nearby, the smartphone 2 switches to a delivery management application. At this time, the in-vehicle ECU 6 causes the smartphone 2 to be horizontally placed. When it is determined based on the speed information and ignition information of the vehicle that the vehicle is stopping to carry a package to the delivery destination, the in-vehicle ECU 6 causes the smartphone 2 to be vertically placed for easy removal. There are a plurality of ways to switch between applications, such as by touching the smartphone 2 or by using voice commands.

Further, the smartphone 2 may be controlled to be vertically placed or horizontally placed depending on the type of application used in the smartphone 2. For example, when the navigation application, a map application, an SNS application, or a telephone is used, the smartphone 2 is placed vertically. When the video playback application, an image/video shooting application, data management (delivery management), a game, or the like is used, the smartphone 2 is horizontally placed.

Here, features of the embodiments of the holding device according to the present invention described above are briefly summarized and listed in the following [1] to [5].
[1] A holding device (1, 1B, 1C) installed in a vehicle and for holding an electronic device (2) including a display screen (21), the holding device (1, 1B, 1C) including:
   a holding unit (3, 3B, 3C) configured to hold the electronic device (2);
   a rotation unit (4, 4B, 4C) configured to rotate the holding unit (3, 3B, 3C) in a direction about an axis intersecting the display screen (21); and
   a rotation control unit (6) configured to control rotation of the rotation unit (4, 4B, 4C) based on vehicle information indicating a state of the vehicle.

According to the above-described configuration [1], since the rotation control unit (6) controls the rotation of the rotation units (4, 4B, 4C) according to the state of the vehicle, the electronic device (2) can be rotated according to the state of the vehicle without the operation of the user.

[2] The holding device (1, 1B, 1C) according to [1], in which
in a case that the vehicle information indicates that the vehicle is in reverse, the rotation control unit (6) rotates the rotation unit (4, 4B, 4C) such that a longitudinal direction of the display screen (21) is along a left-right direction, and in a case that the vehicle information does not indicate that the vehicle is in reverse, the rotation control unit (6) rotates the rotation unit (4, 4B, 4C) such that the longitudinal direction of the display screen (21) is along an upper-lower direction.

According to the above-described configuration [2], when the vehicle is in reverse, the electronic device (2) is horizontally placed (the longitudinal direction of the display screen (21) is along the left-right direction), and is easily used as the rear monitor. The electronic device (2) is vertically placed (the longitudinal direction of the display screen (21) is along the upper-lower direction) except when the vehicle is in reverse, and the electronic device (2) may be disposed in the same manner as in the normal use.

[3] The holding device (1, 1B, 1C) according to [1], in which
in a case that the vehicle information indicates that an ignition switch of the vehicle is turned off, the rotation control unit (6) rotates the rotation unit (4, 4B, 4C) to a predetermined rotation position, and
the holding device (1, 1B, 1C) further includes a setting unit (6) configured to set the predetermined rotation position by communication with the electronic device (2).

According to the above-described configuration [3], since the electronic device (2) is automatically rotated to the predetermined rotation position set by the user when the ignition switch is turned off and the electronic device (2) is desired to be removed from the holding device (1, 1B, 1C), the electronic device (2) is easily removed.

[4] The holding device (1, 1B, 1C) according to [1], in which
the holding unit (3, 3B, 3C) includes a permanent magnet (8, 8C) configured to attract the electronic device (2) and a first electromagnet (9, 9B, 9C), and
the holding device (1, 1B, 1C) further includes an electromagnet control unit (6) configured to control a magnetic force of the first electromagnet (9, 9B, 9C) such that an attraction force of the electronic device (2) to the holding unit (3, 3B, 3C) decreases when the vehicle information indicates that the vehicle is stopped, and controls the magnetic force of the first electromagnet (9, 9B, 9C) such that the attraction force of the electronic device (2) to the holding unit (3, 3B, 3C) increases when the vehicle information indicates that the vehicle is traveling.

According to the above-described configuration [4], the attraction force of the electronic device (2) to the holding unit (3, 3B, 3C) increases while the vehicle is traveling, and the electronic device (2) can be prevented from falling off the holding device (1, 1B, 1C). The attraction force of the electronic device (2) to the holding unit (3, 3B, 3C) decreases while the vehicle is stopped, and the electronic device (2) can be easily removed from the holding device (1, 1B, 1C).

[5] The holding device (1B) according to [4], in which
the first electromagnet (9B) is magnetized along the direction about the axial,
the rotation unit (4B) includes a second electromagnet (13) facing the first electromagnet (9B) in an axial direction intersecting the display screen (21), and
the rotation control unit (6) controls a magnetic force of the second electromagnet (13) to control the rotation of the rotation unit (4B).

According to the above-described configuration [5], the first electromagnet (9, 9B. 9C) for holding the electronic device (2) can be used to rotate the holding unit (3B).

The present application is based on a Japanese patent application (Japanese Patent Application No. 2023-080189) filed on May 15, 2023, and the contents thereof are incorporated herein by reference.

### INDUSTRIAL APPLICABILITY

According to the present invention, it is possible to provide a holding device that can rotate an electronic device according to a state of a vehicle without an operation of a user. The present invention having this effect is useful for the holding device.

### REFERENCE SIGNS LIST

1, 1B, 1C: holding device
2: smartphone (electronic device)
3, 3B, 3C: holding unit
4, 4B, 4C: rotation unit
6: in-vehicle ECU (rotation control unit, setting unit, electromagnet control unit)
8, 8C: permanent magnet
9, 9B, 9C: electromagnet (first electromagnet)
13: electromagnet (second electromagnet)
21: display screen

## Claims

1. A holding device installed in a vehicle and for holding an electronic device including a display screen, the holding device comprising:
a holding unit configured to hold the electronic device;
a rotation unit configured to rotate the holding unit in a direction about an axis intersecting the display screen; and
a rotation control unit configured to control rotation of the rotation unit based on vehicle information indicating a state of the vehicle.

2. The holding device according to claim 1, wherein
in a case that the vehicle information indicates that the vehicle is in reverse, the rotation control unit rotates the rotation unit such that a longitudinal direction of the display screen is along a left-right direction, and
in a case that the vehicle information does not indicate that the vehicle is in reverse, the rotation control unit rotates the rotation unit such that the longitudinal direction of the display screen is along an upper-lower direction.

3. The holding device according to claim 1, wherein
in a case that the vehicle information indicates that an ignition switch of the vehicle is turned off, the rotation control unit rotates the rotation unit to a predetermined rotation position, and
the holding device further includes a setting unit configured to set the predetermined rotation position by communication with the electronic device.

4. The holding device according to claim 1, wherein
the holding unit includes a permanent magnet configured to attract the electronic device and a first electromagnet, and
the holding device further includes an electromagnet control unit configured to control a magnetic force of the first electromagnet such that an attraction force of the electronic device to the holding unit decreases when the vehicle information indicates that the vehicle is stopped, and controls the magnetic force of the first electromagnet such that the attraction force of the electronic device to the holding unit increases when the vehicle information indicates that the vehicle is traveling.

5. The holding device according to claim 4, wherein
the first electromagnet is magnetized along the direction about the axial,
the rotation unit includes a second electromagnet facing the first electromagnet in an axial direction intersecting the display screen, and
the rotation control unit controls a magnetic force of the second electromagnet to control the rotation of the rotation unit.
